# EUROPÄISCHE PATENTSCHRIFT

(11) **EP 0 832 773 B1**
(45) Veröffentlichungstag und Bekanntmachung des Hinweises auf die Patenterteilung: **02.05.2002**
(21) Anmeldenummer: 96250212.6
(22) Anmeldetag: 25.09.1996
(51) Int. Cl.: B60H 1/26, B60J 10/12, B60J 7/00

(54) **Schiebefester**
Sliding window
Fenêtre coulissante

(43) Veröffentlichungstag der Anmeldung: 01.04.1998
(73) Patentinhaber: Stieler, Ulrich, 38642 Goslar (DE)
(72) Erfinder: Stieler, Ulrich, 38642 Goslar (DE)
(74) Vertreter: UEXKÜLL & STOLBERG

(56) Entgegenhaltungen:
- DE-A- 1 455 840
- DE-B- 1 103 780
- FR-A- 1 478 950

## Beschreibung

Die Erfindung betrifft ein Fenster gemäß Oberbegriff des Patentanspruchs 1.

Es sind bereits verschiedene Schiebefenster bekannt, die sich als reines Schiebedach, als kombiniertes Hub-Schiebedach und als Hubdach charakterisieren lassen.

Das bekannte reine Schiebedach läßt sich ausschließlich vorn öffnen, wozu es entweder zwischen Dach und Fahrzeughimmel oder auf dem Dach nach hinten geschoben werden muß. Seine Vorteile bestehen in der einfachen Öffnungsmechanik, der niedrigen Bauhöhe, die eine gute Kopffreiheit mit sich bringt, in der preiswerten Herstellung und außerdem darin, daß nur vorne eine Gefahrenzone hinsichtlich des Einklemmens besteht. Die Nachteile sind darin zu sehen, daß die vordere Spaltöffnung hohe Turbulenzen verursacht, was zu Lärmbildung führt. Ferner ist es bei geringer Öffnung möglich, leicht in das Innere des Fahrzeugs einzudringen.

Das bekannte Hub-Schiebedach läßt sich variabel hinten nach oben oder vorn durch Zurückschieben öffnen, was eine leichte Entlüftung oder eine große Öffnung ergibt. Allerdings ist mit der Öffnung eine große Geräuschentwicklung verbunden und es wird außerdem die Kopffreiheit durch die große Bauhöhe der Mechanik beeinträchtigt. Das System ist bei leichter Öffnung des Daches nicht einbruchssicher und es besteht sowohl vorne, als auch hinten eine Gefahrenzone hinsichtlich des Einklemmens. Die Mechanik ist kompliziert und teuer und die Dichtungstechnik muß aufwendig ausgelegt sein.

Schließlich ist noch das einfache Hubdach bekannt, das sich nur nach oben öffnen läßt. Es ist zwar nicht so aufwendig, wie die beiden anderen Systeme und schränkt auch kaum die Kopffreiheit ein, aber es ist häufig undicht und bietet bei geöffnetem Dach eine beträchtliche Geräuschentwicklung beim Fahren. Im übrigen läßt sich die Gefahrenzone nur schlecht sichern. Ferner ist bei geöffnetem Dach Zugang zum Fahrzeugraum, also keine Diebstahlsicherheit, gegeben.

Es ist daher **Aufgabe** der Erfindung, ein gegenüber dem Stand der Technik verbessertes Schiebefenster zu schaffen.

Zur **Lösung** dieser Aufgabe dient ein Fenster mit den Merkmalen des Patentanspruchs 1.

Das erfindungsgemäße Fenster kann im Dach oder in der Seitenwand eines Kraftfahrzeugs, eines Bootes, eines Schiffes oder eines Hauses vorgesehen sein und durch Verschieben in der Fensterebene eine Entlüftungsöffnung freilegen. Dieses Ziel wird dadurch erreicht, daß an den Rand der Scheibe eine Öffnung mit Rippen für den Durchtritt von Luft angeformt ist. Durch Bewegen der Scheibe nach vorn oder hinten bzw. nach oben oder unten, kann die mit Rippen versehene Öffnung von einer geschlossenen Stellung in eine den Durchtritt von Luft zulassende, geöffnete Stellung verschoben werden. Dies entspricht im wesentlichen der Anordnung wie bei dem Schiebedach, jedoch ist die Verschiebungsebene nicht wie zuvor im wesentlichen horizontal, sondern eher vertikal angeordnet.

Vorteilhafte Ausgestaltungen der Erfindung sind in den Unteransprüchen gekennzeichnet.

Die Vorteile des erfindungsgemäßen Fensters liegen in folgenden Punkten:
- Sehr preiswert durch harte Umspritzung.
- Einfaches System ohne komplizierte Mechanik.
- Hohe Variabilität durch Verschiebung in beide Richtungen.
- Einfaches Dichtungssystem.
- Sehr geringe Bauhhöhe, große Kopffreiheit.
- Bei Umspritzung ohne Haftvermittler voll recyclefähig.
- Einbruchssicher, selbst bei Verschiebung nach vorn in Entlüftungsstellung.
- Regensicher, selbst bei Entlüftungsstellung.
- Automatische Öffnung bei zu hoher Innentemperatur möglich.
- Sehr geräuscharm bei Verschiebung nach vorn, da die Öffnung im turbulenzarmen Bereich liegt und nicht aus dem Fahrzeug herausragt.
- Die Befestigungselemente sind bereits in der Umspritzung integriert.
- Seitlich sind nur einfache Führungsschienen erforderlich.
- Unter Umständen ist kein Kleber oder Primer, etc. erforderlich.
- Der Glaspreis ist gering, da die Kanten nicht feinjustiert geschliffen werden müssen und auch der Keramikdruck kann bei Umspritzung ohne Haftvermittler entfallen.
- Die Sichtblendenführung ist in die Umspritzung integrierbar.
- Das System kann auch nachträglich eingebaut werden.
- Es sind keine Metalleinlegeteile zur Versteifung mehr notwendig.
- Eine Sichtblendenführung kann im Rahmen integriert werden.

Die Erfindung wird im folgenden anhand eines Ausführungsbeispiels näher erläutert; dabei zeigen:
- **Figur 1**: eine Draufsicht auf ein Kraftfahrzeug mit Schiebedach;
- **Figur 2**: einen schematischen Längsschnitt durch das Schiebedach in geschlossener Stellung;
- **Figur 3**: einen schematischen Längsschnitt durch das Schiebedach in nach vorn geöffneter Stellung;
- **Figur 4**: ein Seitenfenster für einen Bus bestehend aus zwei Hälften, von denen eine über die andere schiebbar und an ihrem Ende mit einer erfindungsgemäßen Öffnung versehen ist;
- **Figur 5**: eine Ausführungsform wie Figur 4, jedoch in einer um 180° Grad gedrehten Anordnung;
- **Figur 6**: eine Scheibe für ein Dreiecksfenster, bei dem die mit Rippen versehene Öffnung an der langen Seite des Dreiecks angeordnet ist;
- **Figur 7**: eine Scheibe für ein Dreiecksfenster ähnlich wie in Figur 6, wobei die Rippen jedoch senkrecht zur Scheibenebene verlaufen;
- **Figur 8**: eine Türscheibe mit Abschrägung, wobei die mit Rippen versehene Öffnung über zwei Seiten der im wesentlichen rechteckigen Türscheibe verläuft;
- **Figur 9**: eine Ansicht der Scheibe von Figur 8 in Richtung des Pfeils A von Figur 8 gesehen;
- **Figur 10**: eine Türscheibe ähnlich wie Figur 8, wobei eine große Anzahl von Rippen im wesentlichen senkrecht zur Scheibenebene angeordnet ist;
- **Figur 11**: einen Ausschnitt aus dem Kreis B von Figur 10; und
- **Figur 12**: ein Dreiecksfenster an einem schematisch angedeutenen Kraftfahrzeug mit erfindungsgemäßer Öffnung.

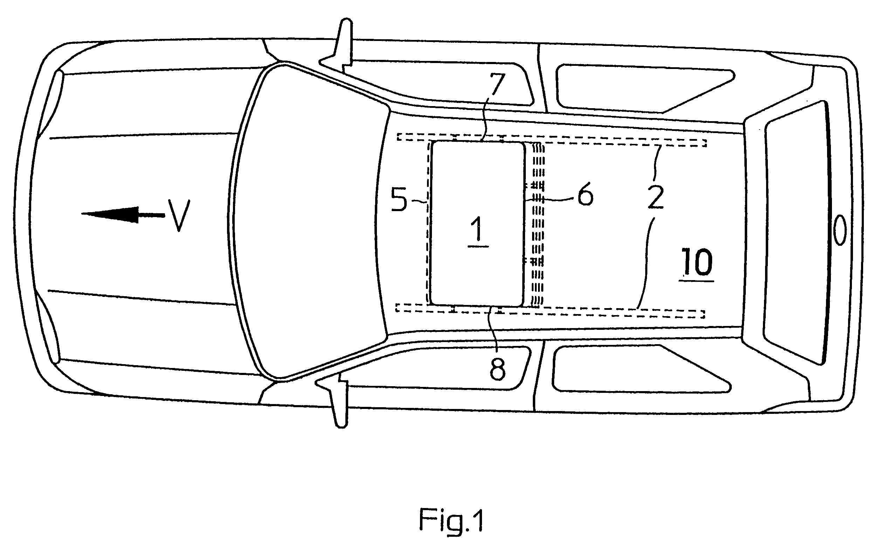

**Figur 1** zeigt eine Draufsicht auf ein Kraftfahrzeug mit Schiebedach 1, das in Führungen 2 zwischen einer ersten, vorderen Stellung, einer zweiten oder Zwischenstellung und einer dritten oder hinteren Stellung verschiebbar ist. Die Fahrtrichtung und damit "vorn" ist durch den Pfeil V angedeutet.

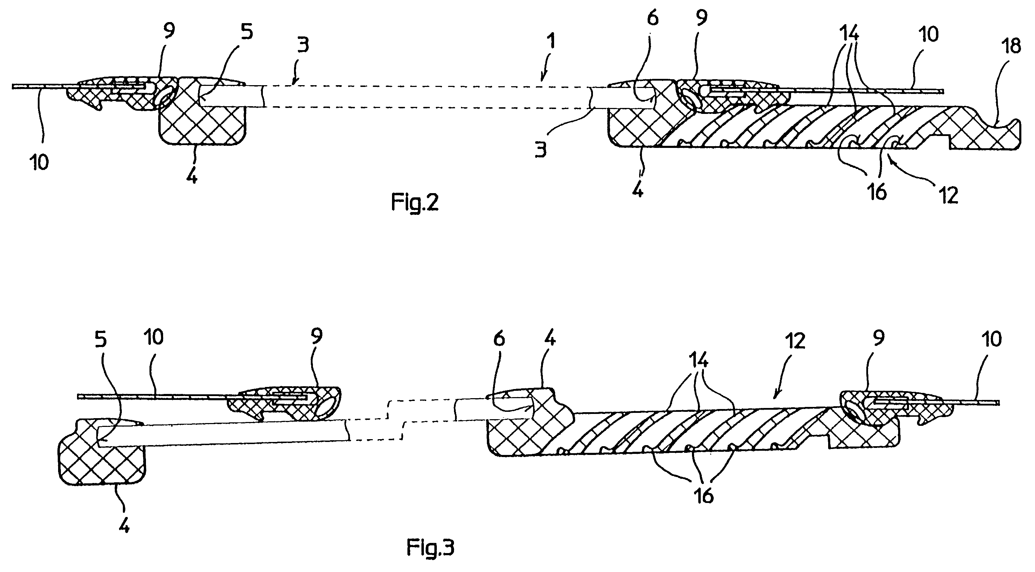

**Figur 2** zeigt einen schematischen Längsschnitt durch das Schiebedach 1 in der zweiten oder geschlossenen Stellung. Ein Deckel 3 aus Glas, Metall oder Kunststoff ist an allen Seiten mit einer Dachumrandung 4 aus hartem Kunststoff umspritzt, beispielsweise Polypropylen (PP), Polyoximethylen (POM), o.ä.. Man erkennt, wie die Dachumrandung 4 den Vorderrand 5 und den Hinterrand 6 des Schiebedachs 1 umfaßt. In gleicher Weise werden auch die Seitenränder 7 und 8 von der Dachumrandung 4 umfaßt. Dabei sind weder ein Kleber, noch ein Primer, noch eine besonders genaue Vorbearbeitung der Deckelkanten erforderlich. Eine in der Deckelebene abschließende Umspritzung (sg. "flush-glazing") muß jedoch mit feinjustierten Glaskanten und Keramikdruck sowie mit Haftvermittler versehen sein.

Der Vorderrand 5 der Dachumrandung 4 stößt gegen ein Dichtprofil 9 des Dachausschnitts, welches das Blech des Fahrzeugdachs 10 umlaufend umgibt.

An den Hinterrand 6 der Dachumrandung 4 ist eine jalousieförmige Öffnung 12 angeformt, die eine Anzahl von querverlaufenden Rippen 14 aufweist. Die Rippen 14 erstrecken sich in einer Ausführung quer über die gesamte Breite des Schiebedachs 1. In einer anderen Ausführungsform können sie auch kürzer sein oder ganz entfallen. Außerdem sind die Rippen 14 im Winkel zur Senkrechten auf das Schiebedach ausgerichtet, so daß sie in der Öffnung 12 schräg stehen und Regentropfen nicht senkrecht in das Innere des Fahrzeugs fallen lassen. An ihrem unteren Rand sind ferner Ablaufrinnen 16 angeformt, die das Regenwasser seitlich ablaufen lassen und damit verhindern, daß es in das Fahrzeuginnere tropft.

**Figur 3** zeigt das Schiebedach 1 in der ersten oder vorderen Stellung, bei der die Öffnung 12 eine Entlüftung im hinteren Bereich des Schiebedachs 1 zuläßt. Dabei gleitet der Vorderrand 5 der Dachumrandung 4 unter den vorderen Rand des Dichtprofils 9 und schiebt sich unter das Fahrzeugdach 10. Bei vollständig nach vorn bewegtem Schiebedach 1 greift eine am hinteren Rand der Öffnung 12 vorgesehene, nach oben gerichtete Hohlkehle 18 in bzw. unter den hinteren Rand des Dichtprofils 9 und fixiert so diese Stellung des Schiebedachs 1. Im vorderen Bereich des Dachausschnitts kann noch ein beweglicher Windabweiser befestigt sein.

Die vollständig geöffnete Stellung des Schiebedachs 1 ist in den Figuren nicht dargestellt, da in dieser Stellung die mit jalousieartigen Rippen 14 versehene Öffnung nicht zum Tragen kommt. Der Fachmann weiß aber, wie sie darzustellen wäre, nämlich indem der Vorderrand 5 der Dachumrandung 4 unter dem hinteren Rand des Dichtprofils 9 liegt.

Es wird darauf hingewiesen, daß unter "Dachumrandung" nicht nur ein Kunststoffprofil verstanden werden soll, das nur wenig über den Deckelrand vorsteht, sondern daß in einer anderen Ausführung damit auch ein Rahmen aus Metall oder Kunststoff gemeint ist, in den der Deckel 3 eingebettet sein kann und der parallel zur Dachebene verschiebbar ist.

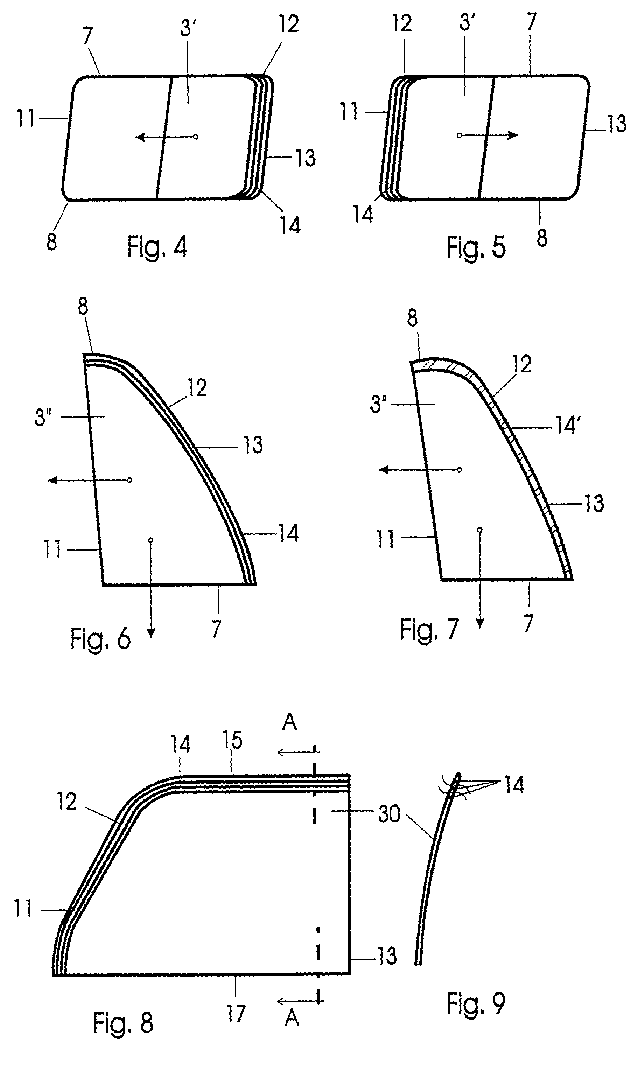

**Figur 4** zeigt in schematischer Darstellung ein Seitenfenster für ein Kraftfahrzeug o.ä. mit einer geteilten Scheibe 3', von der eine Hälfte über die andere schiebbar ist. Dies ist in der Zeichnung durch einen Pfeil angedeutet. An den hinteren Rand 13 der Scheibe 3' ist ähnlich wie bei der zuvor beschriebenen Ausführungsform des Schiebedachs eine Öffnung 12 angeformt, die jalousieartige Rippen 14 aufweist. Zu diesem Zweck bildet die Öffnung 12 entweder Teil einer nicht dargestellten Scheibenumrandung oder sie ist über ein geeignetes Verbindungsmittel mit der Scheibenumrandung verbunden. Im eingebauten Zustand ist der Bereich der Öffnung 12 bei gesschlossenem Fenster von der Karosserie des Kraftfahrzeugs o.ä. verdeckt, so daß keine Luft durch die Rippen 14 in das Fahrzeuginnere strömen kann. Wenn die Scheibe 3' jedoch in Richtung des Pfeils verschoben wird, dann tritt die Öffnung 12 mit den Rippen 14 aus der Karosserie heraus und gestattet den Durchtritt von Luft. Wie bei dem Schiebedach erstrecken sich die Rippen in einer Ausführungsform über die volle Höhe der Öffnung 12. Es ist dem Fachmann klar, daß die Rippen aber auch kürzer gestaltet werden können, so daß sie sich nicht über die volle Höhe der Scheibe 3' erstrecken. Die Rippen 14 sind bei der Ausführungsform nach den Figuren 4 und 5 wiederum so gestaltet, daß sie unter einem Winkel zur Scheibenebene verlaufen, damit Regenwasser, Spritzwasser oder Fahrtwind nicht ungehindert und unmittelbar in das Fahrzeuginnere eintreten können.

**Figur 5** zeigt ein Schiebefenster ähnlich wie Figur 4, jedoch mit am vorderen Rand 11 der Scheibe 3' angebrachter Öffnung 12.

**Figur 6** zeigt ein Dreiecksfenster für ein Kraftfahrzeug, bei dem entlang des hintern Randes 13, der in etwa die lange Seite des Dreiecks darstellt, die mit Rippen 14 versehene Öffnung 12 angeformt ist. Die Rippen 14 verlaufen im wesentlichen in der Ebene der Scheibe 3" und sind zu dieser in einer Ausführungsform etwas geneigt, um wiederum den direkten Durchtritt von Luft, Regenwasser oder Spritzwasser etwas abzulenken. In der dargestellten Ausführungsform erstrecken sich die Rippen 14 praktisch über die gesamte lange Seite der Dreiecksscheibe 3".

**Figur 7** zeigt eine Dreiecks-Scheibe 3" ähnlich wie Figur 6, jedoch sind an Stelle von wenigen langen Rippen eine größere Anzahl kurzer Rippen 14', die sich im Wesentlichen senkrecht zur Ebene der Scheibe 3" erstrecken.

**Figur 8** zeigt eine Türscheibe 30, die entweder von Hand über eine Türkurbel oder elektrisch über einen Fensterhebermotor in die Fahrzeugtür eines Kraftfahrzeugs absenkbar bzw. aus dieser hochfahrbar ist. Die Türscheibe 30 hat etwa die Form eines Rechtecks mit einer Abschrägung, so daß sie etwa fünfeckig aussieht. Der untere Rand 17 und der hintere Rand 13 sind etwa geradlinig, während eine erfindungsgemäße Öffnung 12 über den oberen Rand 15 und den vorderen Rand 11 verläuft. Die Öffnung ist wiederum mit Rippen 14 versehen, die im wesentlichen in der Scheibenebene verlaufen, zu dieser jedoch unter einem kleinen Winkel geneigt sind, um den Eintritt von Wasser möglichst zu unterbinden und den Lufteintritt abzulenken.

**Figur 9** zeigt einen Schnitt entlang der Linie A-A in Figur 8, wobei man insbesondere den Verlauf der Rippen 14 und den durch Pfeile angedeutete Lufteintritt erkennt.

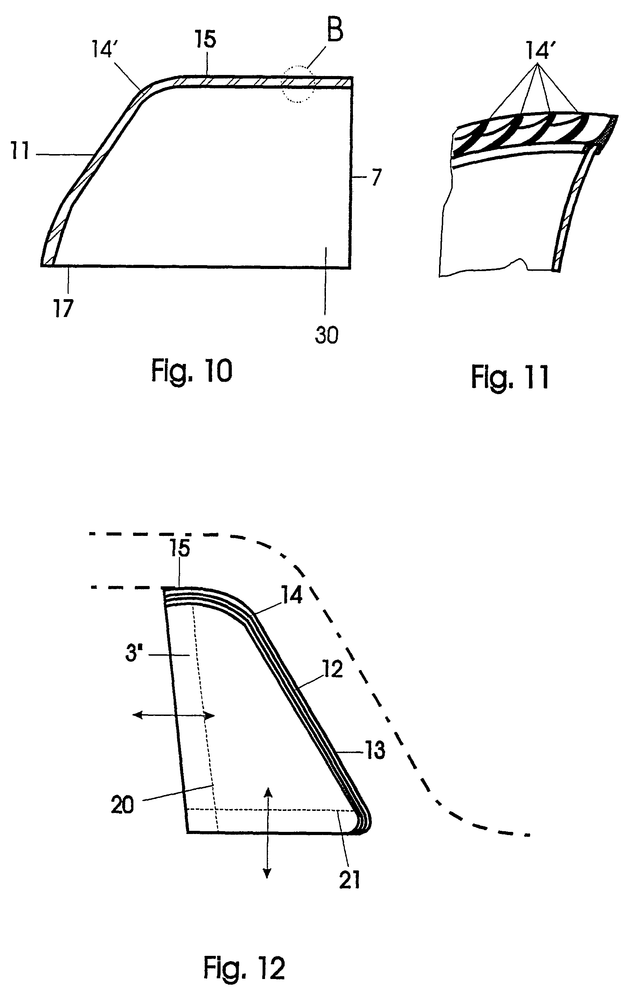

**Figur 10** zeigt eine Türscheibe ähnlich wie Figur 8 mit einer über den oberen Rand 15 und den vorderen Rand 11 verlaufenden Öffnung 12, in der eine Vielzahl von Rippen 14' angeordnet ist, die im wesentlichen senkrecht zur Ebene der Scheibe 30 verlaufen. Anstelle von wenigen, langen Rippen 14 wie bei der Ausführungsform nach Figur 8 ist hier eine große Anzahl kurzer Rippen 14' vorgesehen, die ebenfalls den direkten Durchtritt von Wasser behindern und den senkrechten Durchtritt von Luft ablenken sollen.

**Figur 12** zeigt ein Dreiecksfenster für ein angedeutetes Kraftfahrzeug, wobei am hinteren Rand 13 der Scheibe 3" eine mit Rippen 14 versehene Öffnung 12 angeformt ist. Insoweit entspricht die Scheibe 3" der Ausführungsform nach Figur 6. Dabei ist durch die Linien 20 und 21 angedeutet, wie weit die Scheibe 3" vor- und zurück bzw. nach unten und oben verschoben werden muß, um den Durchtritt von Luft durch die Öffnung 12 zu gestatten. Wenn die Scheibe 3" ganz nach oben in die Stellung gemäß der Linie 21 bewegt ist, dann tritt am oberen Rand 15 des Dreiecksfensters keine Luft ein. Wenn die Scheibe 3" in die Stellung gemäß der Linie 20 bewegt ist, dann tritt auch keine Luft am hinteren Rand 13 ein. Die Bewegungsrichtungen der Scheibe 3" sind durch die Pfeile angedeutet.

Es wird darauf hingewiesen, daß die Rippen 14 in der Weise verstellbar sein können, daß sie ähnlich wie eine Jalousie um ihre Längsachse drehbar sind und auf diese Weise die Öffnung 12 mehr oder weniger weit öffnen oder verschließen können. Der Fachmann weiß, wie eine derartige Drehbarkeit der Rippen 14 eingerichtet werden muß. Unter "wenigen" Rippen wird im übrigen eine Anzahl von 3 bis 10, vorzugsweise 3 bis 5 Rippen verstanden.

## Patentansprüche

1. Fenster mit einem Deckel (3) oder einer Scheibe (3'; 3"; 30) aus Glas oder Kunststoff für Kraftfahrzeuge, Boote, Schiffe, Häuser o.ä., das zur Entlüftung parallel zur Deckel- oder Scheibenebene nach vorn und/oder nach hinten bzw. nach oben und/oder nach unten verschiebbar ist, wobei gegenüberliegende Ränder (7, 8) parallel zur Bewegungsrichtung der Scheibe (3; 3'; 3") mit Führungsfortsätzen versehen oder in Scheibenführungen einsetzbar sind, **dadurch gekennzeichnet, daß** im Bereich des in Bewegungsrichtung des Deckels (3) oder der Scheibe (3'; 3"; 30) hinteren (13) oder vorderen (11) oder oberen (15) oder unteren (17) Randes des Deckels (3) oder der Scheibe (3; 3'; 3") eine Öffnung (12) angeformt ist, die den Aus- und Eintritt von Luft gestattet.

2. Fenster nach Anspruch 1, **dadurch gekennzeichnet, daß** die Öffnung (12) mit jalousieartigen Rippen (14) versehen ist.

3. Fenster nach Anspruch 2, **dadurch gekennzeichnet, daß** die Rippen (14) im Winkel zur Ebene des Deckels (3) oder der Scheibe (3'; 3"; 30) geneigt sind.

4. Fenster nach Anspruch 2, **dadurch gekennzeichnet, daß** die jalousieartigen Rippen (14) verstellbar sind.

5. Fenster nach Anspruch 2, **dadurch gekennzeichnet, daß** die jalousieartigen Rippen (14) ziehharmonikaartig ausziehbar sind.

6. Fenster nach einem der Ansprüche 2 bis 5, **dadurch gekennzeichnet, daß** sich die jalousieartigen Rippen (14) über die gesamte Breite der Öffnung (12) erstrecken.

7. Fenster nach einem der Ansprüche 1 bis 6, **dadurch gekennzeichnet, daß** die Öffnung (12) einstückig an den Deckel (3) oder die Scheibe (3'; 3"; 30) angeformt ist.

8. Fenster nach einem der Ansprüche 1 bis 7, **dadurch gekennzeichnet, daß** die Öffnung (12) über ein Verbindungsmittel mit dem Deckel (3) oder der Scheibe (3'; 3"; 30) verbunden ist.

9. Fenster nach Anspruch 8, **dadurch gekennzeichnet, daß** das Verbindungsmittel ein Formschluß ist.

10. Fenster nach Anspruch 9, **dadurch gekennzeichnet, daß** der Formschluß eine Schwalbenschwanzführung ist.

11. Fenster nach Anspruch 8, **dadurch gekennzeichnet, daß** das Verbindungsmittel Schrauben, Druckknöpfe, Rastverbindungen, o.ä. umfaßt.

12. Fenster nach einem der Ansprüche 1 bis 11, **dadurch gekennzeichnet, daß** die Scheibe (30) eine teilweise abgeschrägte Scheibe ist und daß sich die Öffnung (12) vom oberen Rand (15) über die Abschrägung zu einem Seitenrand erstreckt.

13. Fenster nach einem der Ansprüche 1 bis 11, **dadurch gekennzeichnet, daß** die Scheibe (3") eine Dreiecksscheibe ist und daß sich die Öffnung (12) über die Abschrägung der Dreiecksscheibe erstreckt.

14. Fenster nach Anspruch 1, **dadurch gekennzeichnet, daß** eine Deckelumrandung (4) um den Rand des Deckels (3) gespritzt ist.

15. Fenster nach Anspruch 1, **dadurch gekennzeichnet, daß** eine Deckelumrandung (4) mit dem Rand des Deckels (3) verklebt ist und an der Oberseite von Deckel (3) und Fahrzeugdach (10) mit diesen fluchtet.

16. Fenster nach Anspruch 14 oder 15, **dadurch gekennzeichnet, daß** die Deckelumrandung (4) mit einer Sicherheitskontaktleiste versehen ist.

## Claims

1. A window having a cover (3) or a pane (3'; 3"; 30) made of glass or plastic for motor vehicles, boats, ships, houses or similar, which for ventilation is displaceable parallel to the plane of the cover or plane forwards and/or backwards, and respectively upwards and/or downwards, with opposite edges (7, 8) parallel to the direction of movement of the pane (3; 3'; 3") being provided with guide extensions or being insertable into rails in the pane, **characterised in that** an opening (12), which permits the entry and exit of air, is provided in the region of the rear (13) or front (11) or top (15) or bottom (17) edge of the cover (3) or of the pane (3; 3'; 3") in the direction of movement of the cover (3) or of the pane (3'; 3"; 30).

2. A window according to claim 1, **characterised in that** the opening (12) is provided with shutter-type ribs (14).

3. A window according to claim 2, **characterised in that** the ribs (14) are inclined at an angle to the plane of the cover (3) or of the pane (3'; 3"; 30).

4. A window according to claim 2, **characterised in that** the shutter-type ribs (14) are adjustable.

5. A window according to claim 2, **characterised in that** the shutter-type ribs (14) can be pulled out in the manner of an accordian.

6. A window according to one of claims 2 to 5, **characterised in that** the shutter-type ribs (14) extend over the entire width of the opening (12).

7. A window according to one of claims 1 to 6, **characterised in that** the opening (12) is formed in one piece on the cover (3) or the pane (3'; 3"; 30).

8. A window according to one of claims 1 to 7, **characterised in that** the opening (12) is connected to the cover (3) or the pane (3'; 3"; 30) via a connection means.

9. A window according to claim 8, **characterised in that** the connection means is a form closure.

10. A window according to claim 8, **characterised in that** the form closure is a dovetail guide.

11. A window according to claim 8, **characterised in that** the connection means comprises screws, snap fasteners, lock-in connectors, or similar.

12. A window according to one of claims 1 to 11, **characterised in that** the pane (30) is a partially bevelled pane and **in that** the opening (12) extends from the upper edge (15) over the bevelling to a side edge.

13. A window according to one of claims 1 to 11, **characterised in that** the pane (3") is a triangular pane and **in that** the opening (12) extends over the bevelling of the triangular pane.

14. A window according to claim 1, **characterised in that** a cover border (4) is injected around the edge of the cover (3).

15. A window according to claim 1, **characterised in that** a cover border (4) is stuck to the edge of the cover (3) and at the upper side of cover (3) and vehicle roof (10) it aligns with them.

16. A window according to claim 14 or 15, **characterised in that** the cover border (4) is provided with a security contact strip.

## Revendications

1. Fenêtre comportant un couvercle (3) ou une vitre (3'; 3"; 30) en verre ou en matière plastique pour véhicules automobiles, canots, bateaux, maisons ou analogues, qui pour l'aération, peut être déplacé vers l'avant et/ou vers l'arrière ou vers le haut et/ou vers le bas parallèlement au plan du couvercle ou de la vitre, des bords opposés (7, 8) comportant des prolongements de guidage, parallèlement à la direction de déplacement de la vitre (3; 3'; 3") ou pouvant être insérés dans des guides de la vitre, **caractérisée en ce qu'**une ouverture (12), qui permet la sortie et l'entrée d'air, est formée dans la zone du bord arrière (13) ou du bord avant (11) ou du bord supérieur (15) ou du bord inférieur (17) du couvercle (3) ou de la vitre (3; 3'; 3"), dans la direction de déplacement du couvercle (3) ou de la vitre (3'; 3"; 30).

2. Fenêtre selon la revendication 1, **caractérisée en ce que** l'ouverture (12) est équipée de nervures du type jalousie (14).

3. Fenêtre selon la revendication 2, **caractérisée en ce que** les nervures (14) sont inclinées d'un certain angle par rapport au plan du couvercle (3) ou de la vitre (3';3";30).

4. Fenêtre selon la revendication 2, **caractérisée en ce que** les nervures du type jalousie (14) sont réglables.

5. Fenêtre selon la revendication 2, **caractérisée en ce que** les nervures du type jalousie (14) peuvent être déployées à la manière d'un accordéon.

6. Fenêtre selon l'une des revendications 2 à 5, **caractérisée en ce que** les nervures du type jalousie (14) s'étendent sur toute la largeur de l'ouverture (12).

7. Fenêtre selon l'une des revendications 1 à 6, **caractérisée en ce que** l'ouverture (12) est formée d'un seul tenant sur le couvercle (3) ou sur la vitre (3'; 3"; 30).

8. Fenêtre selon l'une des revendications 1 à 7, **caractérisée en ce que** l'ouverture (12) est reliée au couvercle (3) ou à la vitre (3'; 3"; 30) à l'aide d'un moyen de liaison.

9. Fenêtre selon la revendication 8, **caractérisée en ce que** le moyen de liaison est un système de liaison par formes complémentaires.

10. Fenêtre selon la revendication 9, **caractérisée en ce que** le système de liaison par formes complémentaires est un guide en queue d'aronde.

11. Fenêtre selon la revendication 8, **caractérisée en ce que** le moyen de liaison comprend des vis, des boutons poussoirs, des systèmes de liaison à encliquetage ou analogues.

12. Fenêtre selon l'une des revendications 1 à 11, **caractérisée en ce que** la vitre (30) est une vitre partiellement biseautée, et que l'ouverture (12) s'étend depuis le bord supérieur (15) par l'intermédiaire du biseau jusqu'à un bord latéral.

13. Fenêtre selon l'une des revendications 1 à 11, **caractérisée en ce que** la vitre (3") est une vitre triangulaire, et que l'ouverture (12) s'étend sur le biseau de la fenêtre triangulaire.

14. Fenêtre selon la revendication 1, **caractérisée en ce qu'**un encadrement (4) de couvercle est moulé par injection autour du bord du couvercle (3).

15. Fenêtre selon la revendication 1, **caractérisée en ce qu'**un encadrement (4) du couvercle est collé sur le bord du couvercle (3) et, au niveau de la face supérieure du couvercle (3) et du toit (10) du véhicule, est aligné avec ces éléments.

16. Fenêtre selon la revendication 14 ou 15, **caractérisée en ce que** l'encadrement (4) du couvercle est pourvu d'une barrette de contact de sécurité.
